# EUROPÄISCHE PATENTSCHRIFT

(11) **EP 1 441 858 B1**
(45) Veröffentlichungstag und Bekanntmachung des Hinweises auf die Patenterteilung: **22.03.2006**
(21) Anmeldenummer: 02760037.8
(22) Anmeldetag: 02.10.2002
(51) Int. Cl.: B03C 7/00, A23L 1/10

(54) **VERFAHREN ZUR ISOLIERUNG VON ALEURONTEILCHEN**
METHOD FOR ISOLATING ALEURONE PARTICLES
PROCEDE D'ISOLATION DE PARTICULES D'ALEURONE

(30) Priorität: 08.11.2001 DE 10154462
(43) Veröffentlichungstag der Anmeldung: 04.08.2004
(73) Patentinhaber: Bühler AG, 9240 Uzwil (CH)
(72) Erfinder: BOHM, Arturo, CH-9242 Oberuzwil (CH); KRATZER, Andreas, CH-8032 Zürich (CH)
(74) Vertreter: Frommhold, Joachim
(86) Internationale Anmeldenummer: PCT/CH2002/000547
(87) Internationale Veröffentlichungsnummer: WO 2003/039754

(56) Entgegenhaltungen:
- EP-A- 0 980 713
- WO-A-85/04349

## Beschreibung

Die Erfindung bezieht sich auf ein Verfahren und eine Vorrichtung zum Trennen der verschiedenen Teilchensorten eines Gemisches aus Teilchen, die durch Zerkleinerung der Kleie von Getreidekömern, insbesondere des Weizens, stammen und als Gemisch aus mindestens einer ersten und einer zweiten Teilchensorte vorliegen, gemäss dem Oberbegriff von Anspruch 1 bzw. 30. Ausserdem bezieht sich die Erfindung auf ein Produkt gemäss Anspruch 51, das durch das erfindungsgemässe Verfahren bzw. die erfindungsgemässe Vorrichtung gewonnen wird.

Die WO 85/04349 beschreibt ein Verfahren zur Gewinnung von Aleuronzellen-Partikeln aus Weizenkleie. Dabei werden in einem ersten Schritt die Kleieteilchen in einer Hammermühle zerkleinert, sodass Aleuronzellen-Partikel und Schalenpartikel als Gemisch vorliegen. Dieses Gemisch wird in einem zweiten Schritt durch Reibungselektrizität elektrisch aufgeladen, wobei die Aleuronzellen-Partikel und die Schalenpartikel unterschiedliche elektrostatische Ladungen erhalten. In einem dritten Schritt wird das Gemisch mit den unterschiedlich geladenen Partikel durch ein elektrisches Feld hindurch bewegt, sodass die unterschiedlich geladenen Partikel unterschiedlich abgelenkt werden, wobei die Schalenpartikel und die Aleuronzellen-Partikel in gesonderten Behältern aufgefangen werden. Die reibungselektrische Aufladung(Schritt 2) erfolgt in einem Strom trockener Luft, in der das Gemisch eingeleitet wird und der sich in einer hohlen Säule bewegt. Dabei treten offensichtlich turbulente Luftströmungen in der Säule ("Elutriator") auf, wobei die Partikel des Gemisches sowohl untereinander als auch an der Innenwand des Elutriators reiben und somit die jeweilige elektrostatische Aufladung erhalten.

Bei diesem Verfahren des Stands der Technik müssten jedoch grosse Luftmengen bewegt werden. Dennoch findet keine intensive reibungselektrische Wechselwirkung zwischen den Partikeln und den Elutiator-Innenwänden statt.

Der Erfindung liegt daher die Aufgabe zugrunde, ein Gemisch aus verschiedenen Teilchensorten, insbesondere Aleuron- und Schalenteilchen aus zerkleinerter Kleie, die sich in ihrer Grösse und Dichte kaum unterscheiden, effizienter als beim Stand der Technik in seine verschiedenen Teilchensorten zu trennen.

Diese Aufgabe wird durch das Verfahren nach Anspruch 1 gelöst, wonach
a) die Teilchen der ersten Teilchensorte und der zweiten Teilchensorte des Gemisches in einem ersten Einwirkungsbereich an mindestens einer Oberfläche mindestens eines Feststoffmaterials derart entlangbewegt werden, dass sie im Verlaufe ihrer Bewegung entlang der mindestens einen Feststoffmateriaioberfläche zumindest abschnittsweise mit mindestens einem Bereich ihrer Teilchenoberfläche mit der Feststoffmaterialoberfläche in Kontakt sind, wodurch die Teilchen der ersten Teilchensorte und die Teilchen der zweiten Teilchensorte derart elektrisch geladen werden, dass die elektrische Ladung der Teilchen der ersten Teilchensorte sich von der elektrischen Ladung der Teilchen der zweiten Teilchensorte ausreichend unterscheidet, um eine elektrostatische Trennung der Teilchen der ersten Teilchensorte von den Teilchen der zweiten Teilchensorte zu ermöglichen;
b) die ausreichend unterschiedlich elektrisch geladenen Teilchen der ersten Teilchensorte und der zweiten Teilchensorte anschliessend in einem zweiten Einwirkungsbereich in ein elektrisches Feld zwischen einem ersten Elektrodenbereich und einem zweiten Elektrodenbereich, zwischen denen eine elektrische Potentialdifferenz besteht, mit im wesentlichen gleicher Geschwindigkeit hineinbewegt werden, wodurch sich die ausreichend unterschiedlich geladenen Teilchen der ersten Teilchensorte und der zweiten Teilchensorte im Verlaufe ihrer Bewegung durch das elektrische Feld auf ausreichend unterschiedlichen Wegen bewegen; und
c) die Teilchen der ersten Teilchensorte und die Teilchen der zweiten Teilchensorte jeweils am Ende ihres Weges durch das elektrische Feld an einem ersten Ort bzw. an einem zweiten Ort aufgefangen werden, dadurch gekennzeichnet, dass die mindestens eine Oberfläche des mindestens einen Feststoffmaterials in dem ersten Einwirkungsbereich konkav gekrümmt ist und die entlang der konkaven Oberfläche bewegten Teilchen der ersten Sorte und Teilchen der zweiten Sorte des Gemisches durch ihre Zentrifugalkraft während ihrer Bewegung innerhalb des ersten Einwirkungsbereichs an die konkave Oberfläche des Feststoffmaterials gedrückt werden.

Die Teilchen können an diesem ersten und zweiten Ort gesammelt und nach ausreichender Anhäufung entnommen werden. Alternativ können sie auch nach der Trennung in Schritt b) in Schritt c) kontinuierlich, z.B. pneumatisch, weitergefördert und z.B. einer Verpackungsanlage zugeführt werden.

Insbesondere sind die Teilchen der ersten Teilchensorte Aleuronteüctien und die Teilchen der zweiten Teilchensorte von Aleuron befreite restliche Teilchen, insbesondere Schalenteilchen, der zerkleinerten Kleie.

Die erfindungsgemässe Aufgabe wird ausserdem durch die Vorrichtung nach Anspruch 30 gelöst, mit:
a) einem ersten Einwirkungsbereich mit mindestens einer Oberfläche mindestens eines Feststoffmaterials, an der die Teilchen der ersten Teilchensorte und der zweiten Teilchensorte des Gemisches derart entlangbewegbar sind, dass sie im Verlaufe ihrer Bewegung entlang der mindestens einen Feststoffmaterialoberfläche zumindest abschnittsweise mit mindestens einem Bereich ihrer Teilchenoberfläche mit der Feststoffmaterialoberfläche in Kontakt sind;
b) einem sich an den ersten Einwirkungsbereich anschliessenden zweiten Einwir kungsbereich mit einem ersten Elektrodenbereich und einem zweiten Elektrodenbereich, zwischen denen eine elektrische Spannung anlegbar ist; und mit einem ersten Sammelbereich für die Teilchen der ersten Sorte und einem von dem ersten Sammelbereich getrennten zweiten Sammelbereich für die Teilchen der zweiten Sorte, dadurch gekennzeichnet, dass die mindestens eine Oberfläche des mindestens einen Feststoffmaterials in dem ersten Einwirkungsbereich konkav gekrümmt ist, so dass die entlang der konkaven Oberfläche bewegbaren Teilchen der ersten Sorte und der zweiten Sorte aufgrund ihrer Zentrifugalkraft während ihrer Bewegung innerhalb des ersten Einwirkungsbereichs an die konkave Oberfläche des Feststoffmaterials gedrückt werden.

Insbesondere ist die mindestens eine Oberfläche des mindestens einen Feststoffmaterials in dem ersten Einwirkungsbereich konkav gekrümmt, so dass die entlang der konkaven Oberfläche bewegbaren Teilchen der ersten Sorte und der zweiten Sorte aufgrund ihrer Zentrifugalkraft während ihrer Bewegung innerhalb des ersten Einwirkungsbereichs an die konkave Oberfläche des Feststoffmaterials gedrückt werden.

Das erfindungsgemässe Produkt, insbesondere Aleuronteilchen, das durch Trennen der verschiedenen Teilchensorten des Gemisches durch Anwendung der Schritte a), b) und c) des oben genannten Verfahrens gewonnen wurde, weist eine hohe Reinheit auf.

Vorzugsweise wird es durch mehrmalige Anwendung der Schritte a), b) und c) gewonnen.

Weitere Vorteile, Merkmale und Anwendungsmöglichkeiten der Erfindung ergeben sich aus den Unteransprüchen und der folgenden Beschreibung zweier efindungsgemässer Ausführungsbeispiele anhand der Zeichnung, wobei:
- Fig. 1: ein erstes Ausführungsbeispiel der Erfindung zeigt; und
- Fig. 2: ein zweites Ausführungsbeispiel der Erfindung zeigt

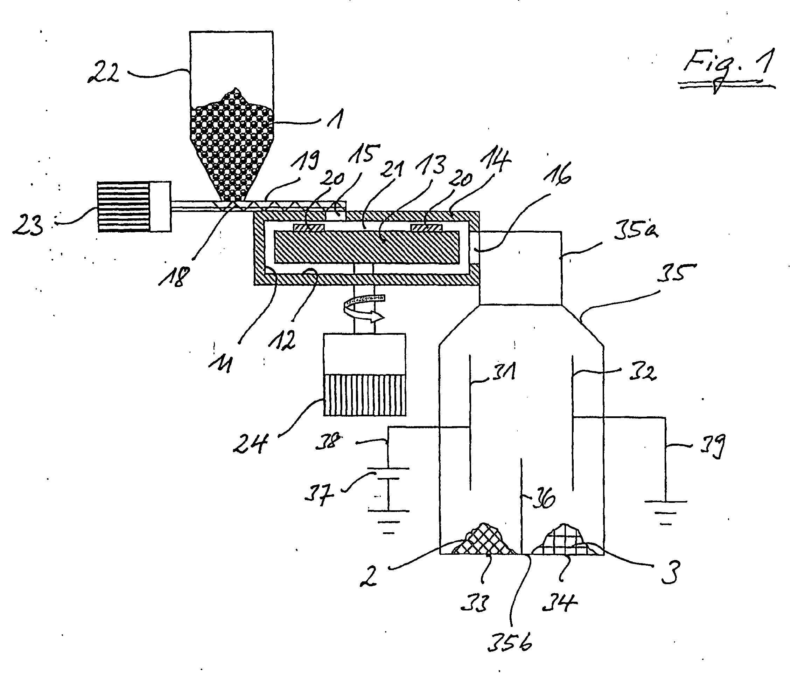

Die in Fig. 1 gezeigte erste efindungsgemässe Vorrichtung enthält ein Zufuhrgefäss 22, in dem das zu trennende Gemisch 1, das mindestens eine erste Teilchensorte 2 und ein zweite Teilchensorte 3 enthält, dem ersten Einwirkungsbereich 13, 14 zugeführt wird, in welchem eine je nach Teilchensorte unterschiedliche elektrische Aufladung der Teilchen 2, 3 des Gemisches 1 stattfindet, bevor die elektrisch unterschiedlich geladenen Teilchen 2, 3 dem zweiten Einwirkungsbereich 31, 32, 35 zugeführt werden, in welchem sie entsprechend ihrer elektrischen Ladung nach Teilchensorte sortiert an verschiedenen Orten 33, 34 in einem Trenngefäss 35 angehäuft werden.

Das Gemisch 1 gelangt durch seine Schwerkraft aus dem nach unten verjüngten Zufuhrgefäss 22 in eine Fördereinrichtung 18, 19, die aus einer Förderschnecke 18 in einem Förderkanal 19 besteht. Die durch einen Antriebsmotor 23 angetriebene Förderschnecke 18 transportiert das Gemisch 1 über einen Produkteinlass 15 in ein Gehäuse 14, in welchem ein Rotorelement 13 drehbar gelagert ist.

Zwischen dem durch einen Antriebsmotor 24 angetriebenen Rotorelement 13 und dem Gehäuse 14 befindet sich ein Spaltbereich 21, durch den das über den Produkteinlass 15 zugeführte und auf das Rotorelement 13 auftreffende Gemisch 1 durch Reibung an der Oberfläche des Rotorelements sowohl tangential als auch radial beschleunigt wird. Das so beschleunigte Gemisch 1 bewegt sich durch den Spaltbereich 21 hindurch und trifft schräg auf die konkav gekrümmte Oberfläche 11 der Gehäuseinnenwand auf. Durch seine eigene Trägheit (Zentrifugalkraft) und durch ständig nachgeliefertes Gemisch wird das Gemisch 1 gegen die konkav gekrümmte Oberfläche 11 gedrückt und an ihr entlang bewegt, bis es durch den Produktauslass 16 aus dem Gehäuse 14 austritt und in ein Trenngefäss 35 gelangt.

Das scheibenartige Rotorelement 13 besitzt Erhebungen 20, die sich auf seiner dem Produkteinlass 15 zugewandten Scheibenfläche befinden. Zusätzlich zur schon erwähnten Reibung an der Oberfläche des Rotorelements 13 ("Prallscheibe") tragen diese Erhebungen 20 einerseits ebenfalls zur Beschleunigung des Gemisches 1 und der stets vorhandenen Luft durch den Spaltbereich 21 bei und üben andererseits eine Prallwirkung auf die Teilchen 2, 3 des Gemisches 1 aus, wodurch ggf. vorhandene Agglomerate aus mehreren Teilchen aufgelöst werden. Diese Prallauflösung von Agglomeraten vor oder während der elektrischen Aufladung der Teilchen durch Reibung an Festkörper-Oberflächen ist wichtig, da derartige Agglomerate natürlich auch aus Teilchen der verschiedenen Sorten bestehen können, die dann je nach ihrer Summenladung zu dem Sammelort 33 oder dem Sammelort 34 gelangen würden. Dann hätte man aber auf jeden Fall "Fremdteilchen" an den jeweiligen Sammelorten 33 und 34.

Je nach ihrer geometrischen Form können diese Erhebungen 20 vorwiegend beschleunigend bzw. pumpend auf das Gemisch bzw. die Luft einwirken oder vorwiegend dispergierend auf die Teilchen des Gemisches einwirken. Eine klotzartige, kantige Form dieser Erhebungen 20 begünstigt die Dispergierwirkung, während eine schaufelartige Form die Beschleunigungs- bzw. Pumpwirkung erhöht. Es können auch Erhebungen 20 mit verschiedenen Formen an dem Rotorelement 13 vorgesehen sein, um eine gezielte Wirkung zu erreichen.

Um zu vermeiden, dass durch den Produkteinlass 15 zugeführtes Gemisch 1 einen nur sehr kurzen Weg durch den Spaltbereich 21 zwischen dem Produkteinlass 15 und dem Produktauslass 16 zurücklegt und sich der notwendigen intensiven Einwirkung im ersten Einwirkungsbereich 13, 14 entzieht, ist der Produkteinlass 15 bezüglich des Rotorelements 13 exzentrisch angeordnet. Ausserdem (und nicht wie in Fig. 1 aus Gründen der besseren Darstellbarkeit gezeigt) befindet sich der Produkteinlass 15 in der Drehrichtung des Rotorelements 13 entlang der Umfangsrichtung unmittelbar hinter dem Produktauslass 16, so dass das Gemisch 1 zumindest annähernd 360° auf einer spiralartigen Bahn in dem Spaltbereich 21 zwischen dem Produkteinlass 15 und dem Produktauslass 16 zurücklegt. Auf diese Weise wird ein "Kurzschluss" des Gemischweges zwischen dem Produkteinlass und dem Produktauslass vermieden.

Während seines Weges durch den Spaltbereich 21 kommen die Teilchen 2, 3 des Gemisches 1 intensiv mit den inneren Oberflächen 11, 12 des Gehäuses 14 und mit der Oberfläche des Rotorelements 13, insbesondere mit dessen Erhebungen 20 und mit der konkav gekrümmten inneren Oberfläche 11 des Gehäuses 14 in Berührung. Dies führt zu einer spezifischen elektrischen Aufladung der Teilchen der verschiedenen Teilchensorten 2, 3.

Die durch den Produktauslass 16 austretenden dispergierten Teilchen gelangen aufgrund ihrer hohen Geschwindigkeit annähernd horizontal in das Trenngefäss 35, wobei der zylindrische Halsbereich 35a des Trenngefässes als Beruhigungszone für die aus dem Gehäuse 14 austretenden elektrisch unterschiedlich geladenen Teilchen dient. Diese sinken dann unter der Einwirkung der Schwerkraft im Innern des Trenngefässes nach unten. Im Innern des Trenngefässes 35 befinden sich eine erste Elektrode 31 und eine ihr gegenüberliegende zweite Elektrode 32. Die erste Elektrode 31 ist über eine Leitung 38, in der sich eine Spannungsquelle 37 befindet, geerdet, während die zweite Elektrode 32 über eine Leitung 39 unmittelbar geerdet ist. Die in dem elektrischen Feld zwischen den beiden Elektroden 31 und 32 herabsinkenden unterschiedlich geladenen Teilchen bewegen sich je nach ihrer elektrischen Ladung auf unterschiedlichen Wegen nach unten. Eine vom Bodenbereich 35b des Sammelgefässes 35 bis in das elektrische Feld zwischen den Elektroden 31, 32 ragende Trennwand 36 unterteilt den unteren Innenraum des Trenngefässes 35 in einen ersten Sammelbereich 33 und einen zweiten Sammelbereich 34, in denen sich die Teilchen der ersten Sorte bzw., die Teilchen der zweiten Sorte sammeln.

Bei einer vorteilhaften Abwandlung dieses ersten Ausführungsbeispiels von Fig. 1 wird in dem ersten Einwirkungsbereich 13, 14 zusätzlich eine Windsichtung durchgeführt. Hierfür wird über einen (nicht gezeigten) Lufteinlass Luft oder ein anderes Gasgemisch in den ersten Einwirkungsbereich 13, 14 gepumpt, die innerhalb des ersten Einwirkungsbereichs 13, 14 derart geführt wird, dass der Feinanteil ("Mehl" aus Endospermresten, die ggf. noch an den Aleuronteilchen haften), vom Grobanteil (reine Aleuronteilchen und reine Schalenteilchen) getrennt wird, wobei der Feinanteil mit dem Luftstrom über einen (nicht gezeigten) Luftauslass abtransportiert wird und nur der Grobanteil über den Produktauslass 16 in den zweiten Einwirkungsbereich 31, 32, 35 gelangt.

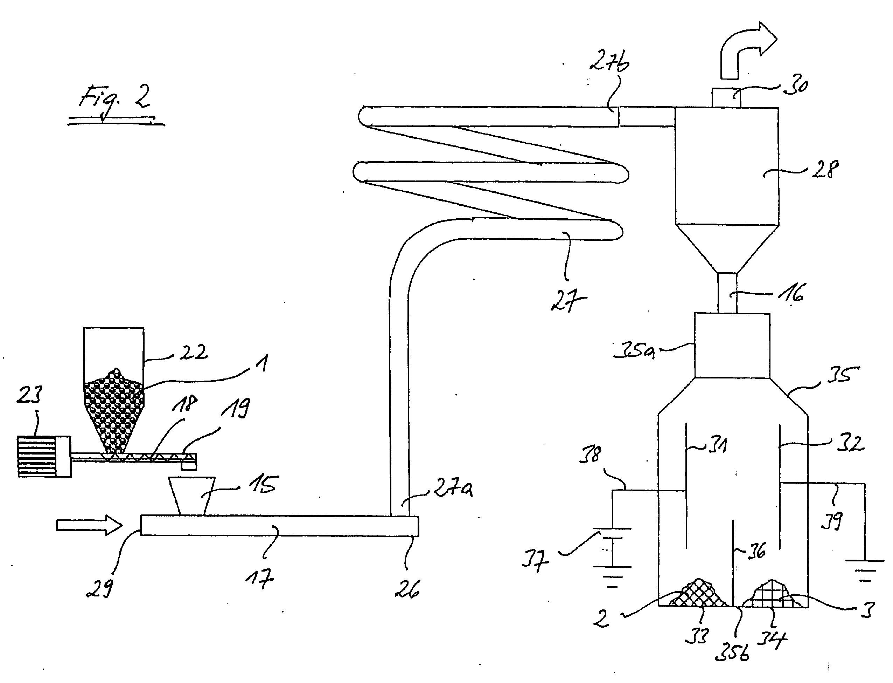

Die in Fig. 2 gezeigte zweite erfindungsgemässe Vorrichtung unterscheidet sich von der in Fig. 1 gezeigten in ihrem ersten Einwirkungsbereich. Ansonsten sind alle Elemente identisch und tragen dieselben Bezugsziffern wie in Fig. 1. Anstelle des Gehäuses 14 mit dem in ihm drehbar gelagerten und durch den Antriebsmotor 24 antreibbaren Rotorelement 13 enthält die Vorrichtung der Fig. 2 einen gekrümmten Kanal 27 mit einem ersten Ende 27a und einem zweiten Ende 27b. Das aus einem Zufuhrgefäss 22 stammende Gemisch 1, insbesondere Aleuronteilchen und Schalenteilchen der Kleie, wird über einen Produkteinlass 15 und ein bewegtes Fluid, insbesondere Luft, über einen Fluideinlass 29 einem Fluidisierungsbereich 17 zugeführt, an dessen Ende sich ein Dispergierwinkel 26 befindet, der mit dem ersten Ende 27a des gekrümmten Kanals verbunden ist und über den der Fluidisierungsbereich 17 in den gekrümmten Kanal 27 mündet. Das zweite Ende 27b des gekrümmten Kanals 27 mündet in einen Produktabscheider 28 mit einem Fluidauslass 30 und einem Produktauslass 16, der in das Trenngefäss 35 mündet.

Die Fördereinrichtung 18, 19 transportiert das Gemisch 1 aus dem Zufuhrgefäss 22, über den Produkteinlass 15 in den Fluidisierungsbereich 17. Es wird ausreichend viel Fluid mit ausreichender Geschwindigkeit verwendet, um eine Flugförderung ohne jegliche Anhäufung von Teilchen im Innern des gekrümmten Kanals 27 zu erzielen. Durch die abrupte Umlenkung beim Aufprall der Teilchen auf den Dispergierwinkel 26 erfolgt die weiter oben erwähnte Dispergierung/Desagglomerierung der Teilchen des Gemisches. Während ihrer anschliessenden Bewegung im Fluidstrom und durch Reibung zwischen den an der Innenfläche des gekrümmten Kanals 27 bewegten Teilchen findet die teilchensorten-spezifische elektrische Aufladung der Teilchensorten 2, 3 des Gemisches 1 statt. Im anschliessenden Produktabscheider 28 wird das Fluid durch den Fluidauslass 30 abgeschieden, und das Gemisch aus den unterschiedlich teilchensortenspezifisch geladenen Teilchen gelangt in das Trenngefäss 35 mit seinem elektrischen Feld.

Prinzipiell sind zwei Fälle der elektrischen Aufladung der Teilchen zu unterscheiden.

Die Teilchen der ersten Teilchensorte werden negativ (positiv) geladen, und die Teilchen der zweiten Teilchensorte werden negativ (positiv) geladen, allerdings in einem anderen Ausmass. Die Teilchen unterscheiden sich also nur im Betrag ihrer Ladung, nicht aber im Vorzeichen der Ladung.

Die Teilchen der ersten Teilchensorte werden negativ (positiv) geladen, und die Teilchen der zweiten Teilchensorte werden positiv (negativ) geladen. Die Teilchen unterscheiden sich also im Vorzeichen und möglicherweise auch im Betrag ihrer Ladung.

Im ersten Fall stossen die elektrisch geladenen Teilchen der ersten Sorte und der zweiten Sorte einander ab, und eine Reagglomerierung unterschiedlicher Teilchen ist praktisch ausgeschlossen. Die Trennung im elektrischen Feld erfolgt durch unterschiedliche starke Ablenkung in dieselbe Richtung.

Im zweiten Fall ziehen die elektrisch geladenen Teilchen der ersten Sorte und der zweiten Sorte einander an, und eine Reagglomerierung unterschiedlicher Teilchen ist möglich. Die Trennung im elektrischen Feld erfolgt durch ggf. unterschiedliche starke Ablenkung in entgegengesetzte Richtungen.

Um auf jeden Fall eine Reagglomerierung von Teilchen vor deren Trennung in die verschiedenen Teilchensorten im elektrischen Feld zu verhindern, müssen die "Teilchendichten" und die "Teilchenverweilzeiten" während der elektrischen Aufladung im ersten Einwirkungsbereich entsprechend klein bzw. kurz gewählt werden.

Bei dem ersten Ausführungsbeispiel von Fig. 1 wird dies schon aufgrund der gewählten Geometrie durch den sich in der Radialrichtung aufweitenden Querschnitt des Spaltbereichs 21 und durch eine ausreichend hohe Drehzahl des Rotorelements 13 erreicht.

Bei dem zweiten Ausführungsbeispiel von Fig. 2 wird dies durch Einstellung eines ausreichend kleinen Produktdurchsatz/Fluiddurchsatzverhäftnisses im Fluidisierungsbereich 17 und eine ausreichend hohe Fluidgeschwindigkeit erreicht.

Bei sämtlichen Ausführungsbeispielen der efindungsgemässen Vorrichtung spielt die Art der Teilchen und die Art der Feststoff-Materialien, an denen die Teilchen triboelektrisch geladen werden, für das Vorliegen des ersten Falle oder des zweiten Falles eine wesentliche Rolle.

So wurden z.B. sehr gute Aufladungs- und Trennergebnisse für ein Aleuronteilchen/Schalenteilchen-Gemisch erzielt, wenn die für die Aufladung entscheidenden Feststoff-Oberflächen 11 und 12 aus Edelstahl bestehen.

### Bezugszeichenliste

- 1: Gemisch aus Teilchen
- 2: erste Teilchensorte
- 3: zweite Teilchensorte
- 11: erste Oberfläche (konkav)
- 12: weitere Oberfläche
- 13,14: erster Einwirkungsbereich (erstes Ausführungsbeispiel)
- 13: Rotorelement
- 14: Gehäuse
- 15: Produkteinlass
- 16: Produktauslass
- 17: Fluidisierungsbereich
- 18,19: Fördereinrichtung
- 18: Förderschnecke
- 19: Förderkanal
- 20: Erhebung (Prallelement, Schaufelelement, ...)
- 21: Spaltbereich
- 22: Zufuhrgefäss
- 23: Antriebsmotor (für Förderschnecke)
- 24: Antriebsmotor (für Rotorelement)
- 26: Dispergierwinkel
- 27,28: erster Einwirkungsbereich (zweites Ausführungsbeispiel)
- 27: gekrümmter Kanal
- 27a: erstes Ende von 27
- 27b: zweites Ende von 27
- 28: Produktabscheider
- 29: Fluideinlass
- 30: Fluidauslass
- 31,32,35: zweiter Einwirkungsbereich (erstes oder zweites Ausführungsbeispiel)
- 31: erster Elektrodenbereich
- 32: zweiter Elektrodenbereich
- 33: erster Ort / Sammelbereich
- 34: zweiter Ort / Sammelbereich
- 35: Treringefäss
- 35a: Halsbereich
- 35b: Bodenbereich
- 36: Trennwand
- 37: Spannungsquelle
- 38, 39: elektrische Leitungen

## Patentansprüche

1. Verfahren zum Trennen der verschiedenen Teilchensorten eines Gemisches aus Teilchen, die durch Zerkleinerung der Kleie von Getreidekörnern, insbesondere des Weizens, stammen und als Gemisch (1) aus mindestens einer ersten und einer zweiten Teilchensorte vorliegen, wobei:
a) die Teilchen der ersten Teilchensorte (2) und der zweiten Teilchensorte (3) des Gemisches in einem ersten Einwirkungsbereich (13, 14; 27, 28) an mindestens einer Oberfläche (11, 12) mindestens eines Feststoffmaterials derart entlang bewegt werden, dass sie im Verlaufe ihrer Bewegung entlang der mindestens einen Feststoffmaterialoberfläche zumindest abschnittsweise mit mindestens einem Bereich ihrer Teilchenoberfläche mit der Feststoffmaterialoberfläche (11, 12) in Kontakt sind, wodurch die Teilchen der ersten Teilchensorte (2) und die Teilchen der zweiten Teilchensorte (3) derart elektrisch geladen werden, dass die elektrische Ladung der Teilchen der ersten Teilchensorte sich von der elektrischen Ladung der Teilchen der zweiten Teilchensorte ausreichend unterscheidet, um eine elektrostatische Trennung der Teilchen der ersten Teilchensorte von den Teilchen der zweiten Teilchensorte zu ermöglichen;
b) die ausreichend unterschiedlich elektrisch geladenen Teilchen der ersten Teilchensorte (2) und der zweiten Teilchensorte (3) anschliessend in einem zweiten Einwirkungsbereich (31, 32, 35) in ein elektrisches Feld zwischen einem ersten Elektrodenbereich (31) und einem zweiten Elektrodenbereich (32), zwischen denen eine elektrische Potentialdifferenz besteht, mit im wesentlichen gleicher Geschwindigkeit hineinbewegt werden, wodurch sich die ausreichend unterschiedlich geladenen Teilchen der ersten Teilchensorte (2) und der zweiten Teilchensorte (3) im Verlaufe ihrer Bewegung durch das elektrische Feld auf ausreichend unterschiedlichen Wegen bewegen; und
c) die Teilchen der ersten Teilchensorte (2) und die Teilchen der zweiten Teilchensorte (3) jeweils am Ende ihres Weges durch das elektrische Feld an einem ersten Ort (33) bzw. an einem zweiten Ort (34) aufgefangen werden, **dadurch gekennzeichnet, dass** die mindestens eine Oberfläche (11) des mindestens einen Feststoffmaterials in dem ersten Einwirkungsbereich (13, 14) konkav gekrümmt ist und die entlang der konkaven Oberfläche (11) bewegten Teilchen der ersten Sorte (2) und Teilchen der zweiten Sorte (3) des Gemisches durch ihre Zentrifugalkraft während ihrer Bewegung innerhalb des ersten Einwirkungsbereichs an die konkave Oberfläche des Feststoffmaterials gedrückt werden.

2. Verfahren nach Anspruch 1, **dadurch gekennzeichnet, dass** die Teilchen der ersten Teilchensorte (2) Aleuronteitchen sind und die Teilchen der zweiten Teilchensorte (3) von Aleuron befreite restliche Teilchen, insbesondere Schalenteilchen, der zerkleinerten Kleie (1) sind.

3. Verfahren nach einem der vorhergehenden Ansprüche, **dadurch gekennzeichnet, dass** das Feststoffmaterial elektrisch leitend ist.

4. Verfahren nach einem der vorhergehenden Ansprüche, **dadurch gekennzeichnet, dass** das Feststoffmaterial elektrisch nichtleitend ist.

5. Verfahren nach einem der vorhergehenden Ansprüche, **dadurch gekennzeichnet, dass** das Feststoffmaterial an seiner Oberfläche abschnittsweise elektrisch leitend und elektrisch nichtleitend ist.

6. Verfahren nach Anspruch 3 oder 5, **dadurch gekennzeichnet, dass** das leitende Feststoffmaterial geerdet ist.

7. Verfahren nach einem der vorhergehenden Ansprüche, **dadurch gekennzeichnet, dass** einer der Elektrodenbereiche (31, 32) geerdet ist.

8. Verfahren nach Anspruch 6 und/oder 7, **dadurch gekennzeichnet, dass** das leitende Feststoffmaterial und der eine der Elektrodenbereiche (31, 32) zusätzlich miteinander elektrisch leitend verbunden sind.

9. Verfahren nach einem der vorhergehenden Ansprüche, **dadurch gekennzeichnet, dass** das Feststoffmaterial ein Metall oder eine Metalllegierung, insbesondere rostfreier Edelstahl, ist.

10. Verfahren nach einem der vorhergehenden Ansprüche, **dadurch gekennzeichnet, dass** die Teilchen der ersten Sorte (2) und die Teilchen der zweiten Sorte (3) des Gemisches (1) innerhalb des ersten Einwirkungsbereichs (13, 14) in Gegenwart eines nichtleitenden Fluids bewegt werden.

11. Verfahren nach einem der vorhergehenden Ansprüche, **dadurch gekennzeichnet, dass** die Teilchen der ersten Sorte (2) und die Teilchen der zweiten Sorte (3) des Gemisches (1) innerhalb des ersten Einwirkungsbereichs (13, 14) mittels eines Fluidstroms bewegt werden.

12. Verfahren nach einem der vorhergehenden Ansprüche, **dadurch gekennzeichnet, dass** die Teilchen der ersten Sorte (2) und die Teilchen der zweiten Sorte (3) des Gemisches (1) innerhalb des ersten Einwirkungsbereichs (13, 14) gegen einen Fluidstrom bewegt werden.

13. Verfahren nach einem der vorhergehenden Ansprüche, **dadurch gekennzeichnet, dass** das Fluid Stickstoff und/oder Kohlendioxid aufweist.

14. Verfahren nach Anspruch 13, **dadurch gekennzeichnet, dass** das Fluid Luft ist.

15. Verfahren nach einem der vorhergehenden Ansprüche, **dadurch gekennzeichnet, dass** die Relativgeschwindigkeit zwischen der mindestens einen Oberfläche (11, 12) und den an ihr entlang bewegten Teilchen (2, 3) etwa 5m/s bis 25m/s beträgt.

16. Verfahren nach Anspruch 14 oder 15, **dadurch gekennzeichnet, dass** die relative Luftfeuchtigkeit der verwendeten Luft unter 25% liegt.

17. Verfahren nach einem der vorhergehenden Ansprüche, **dadurch gekennzeichnet, dass** das Gemisch (1) aus den Teilchen (2, 3) einen Feuchtigkeitsgehalt von weniger als 10% hat.

18. Verfahren nach einem der vorhergehenden Ansprüche, **dadurch gekennzeichnet, dass** die Teilchen des Gemisches (1) vorwiegend kleiner als 500µm und vorzugsweise grösser als 100µm sind.

19. Verfahren nach einem der Ansprüche 10 bis 18, **dadurch gekennzeichnet, dass** der erste Einwirkungsbereich nach der Art eines Zyklonabscheiders mit einem Fluideinlass, einem Fluidauslass, einem Produkteinlass und einem Produktauslass ausgebildet ist, wobei das Teilchen der ersten Sorte und Teilchen der zweiten Sorte aufweisende Gemisch im wesentlichen elektrisch ungeladen durch den Produkteinlass zugeführt und mittels, eines durch den Fluideinlass zugeführten Fluidstroms und durch den Fluidauslass abgeführten Fluidstroms in wirbelartigen Bewegungen durch den ersten Einwirkungsbereich und an dessen konkav gekrümmter Oberfläche entlang bewegt und schliesslich durch den Produktauslass mit den Teilchen in ihrem jeweiligen elektrisch geladenen Zustand in den zweiten Einwirkungsbereich abgeführt wird.

20. Verfahren nach einem der Ansprüche 10 bis 18, **dadurch gekennzeichnet, dass** der erste Einwirkungsbereich einen Zyklonbereich nach der Art eines Zyklonabscheiders mit einem Fluideinlass, einem Fluidauslass, einem Produkteinlass und einem Produktauslass sowie einen Zufuhrbereich aufweist, wobei das Teilchen der ersten Sorte und Teilchen der zweiten Sorte aufweisende Gemisch mittels einer Fördereinrichtung im Zufuhrbereich über den Produkteinlass dem ersten Einwirkungsbereich derart zugeführt wird, dass die Teilchen der ersten Sorte und die Teilchen der zweiten Sorte im Zufuhrbereich jeweils eine erste Teilladung ihrer jeweiligen endgültigen elektrischen Ladung aufnehmen, und wobei das Gemisch der teilweise geladenen Teilchen mittels eines durch den Fluideinlass zugeführten und durch den Fluidauslass abgeführten Fluidstroms in wirbelartigen Bewegungen durch den Zyklonbereich und an dessen konkav gekrümmter Oberfläche entlang bewegt wird, so dass die Teilchen der ersten Sorte und die Teilchen der zweiten Sorte jeweils eine zweite Teilladung ihrer endgültigen elektrischen Ladung aufnehmen und schliesslich durch den Produktauslass in den zweiten Einwirkungsbereich abgeführt werden.

21. Verfahren nach einem der Ansprüche 10 bis 18, **dadurch gekennzeichnet, dass** der erste Einwirkungsbereich (13, 14) ein in einem Gehäuse (14) drehbar gelagertes Rotorelement (13) aufweist, das derart geformt ist, dass bei seiner Drehung die im ersten Einwirkungsbereich (13, 14) enthaltenen Teilchen (2,3) des Gemisches (1) durch die Oberfläche (12) des sich drehenden Rotorelements (13) mit einer Radial- und Tangentialkomponente beschleunigt werden und mit einer Geschwindigkeit mit einer Radial- und einer Tangentialkomponente an die konkav gekrümmte innere Oberfläche (11) des Gehäuses (14) herangeführt werden.

22. Verfahren nach Anspruch 21, **dadurch gekennzeichnet, dass** in einen von dem bewegten Teilchenstrom durchwanderten Spaltbereich (21) zwischen dem Rotorelement (13) und dem Gehäuse (14) Erhebungen (20) hineinragen, die sich von der Oberfläche (12) des Rotorelements und/oder von der Innenwand des Gehäuses erstrecken, um möglicherweise gebildete Agglomerate zwischen den Teilchen des Gemisches zu dispergieren.

23. Verfahren nach einem der Ansprüche 10 bis 18, **dadurch gekennzeichnet, dass** der erste Einwirkungsbereich einen gekrümmten Kanal (27) mit einem ersten Ende und einem zweiten Ende aufweist, in dessen erstes Ende ein Produkteinlass und ein Fluideinlass münden und an dessen zweitem Ende ein Produktabscheider (28) mit einem Produktauslass und einem Fluidauslass zur Trennung von Produkt und Fluid angebracht ist, wobei das Teilchen der ersten Sorte und Teilchen der zweiten Sorte aufweisende Gemisch durch den Produkteinlass zugeführt und mittels eines durch den Fluideinlass zugeführten und durch den Fluidauslass abgeführten Fluidstroms durch den ersten Einwirkungsbereich mit dem gekrümmten Kanal und an dessen konkav gekrümmter Oberfläche entlang bewegt und schliesslich durch den Produktabscheider und durch dessen Produktauslass mit den Teilchen in ihrem jeweiligen elektrisch geladenen Zustand in den zweiten Einwirkungsbereich abgeführt wird.

24. Verfahren nach Anspruch 23, **dadurch gekennzeichnet, dass** der gekrümmte Kanal (27) ein gekrümmter Schlauch oder ein gebogenes Rohr ist.

25. Verfahren nach Anspruch 23 oder 24, **dadurch gekennzeichnet, dass** der gekrümmte Kanal (27) spiralförmig oder schraubenförmig verläuft.

26. Verfahren nach einem der Ansprüche 10 bis 25, **dadurch gekennzeichnet, dass** die Abführung des die elektrisch geladenen Teilchen aufweisenden Gemisches aus dem ersten Einwirkungsbereich (13,14; 27, 28) in den zweiten Einwirkungsbereich (31, 32, 35) durch Schwerkraft und/oder Fliehkraft und/oder einen Fluidstrom erfolgt.

27. Verfahren nach einem der vorhergehenden Ansprüche, **dadurch gekennzeichnet, dass** vor dem ersten Einwirkungsbereich oder innerhalb des ersten Einwirkungsbereichs Agglomerate, die möglicherweise aus Teilchen der ersten Sorte und Teilchen der zweiten Sorte gebildet wurden, dispergiert werden.

28. Verfahren nach Anspruch 27, **dadurch gekennzeichnet, dass** das Dispergieren möglicher Agglomerate vor oder innerhalb des ersten Einwirkungsbereichs durch Prallung erfolgt.

29. Verfahren nach Anspruch 27 oder 28, **dadurch gekennzeichnet, dass** der erste Einwirkungsbereich durch Serienschaltung eines Prallauflösers und eines Zyklonabscheiders gebildet wird.

30. Vorrichtung zum Trennen der verschiedenen Teilchensorten eines Gemisches aus Teilchen, die durch Zerkleinerung der Kleie von Getreidekörnem, insbesondere des Weizens, stammen und als Gemisch (1) aus mindestens einer ersten und einer zweiten Teilchensorte vorliegen, unter Verwendung des Verfahrens nach einem der Ansprüche 1 bis 29, mit:
a) einem ersten Einwirkungsbereich (13, 14; 27, 28) mit mindestens einer Oberfläche (11, 12) mindestens eines Feststoffmaterials, an der die Teilchen der ersten Teilchensorte (2) und der zweiten Teilchensorte (3) des Gemisches derart entlangbewegbar sind, dass sie im Verlaufe ihrer Bewegung entlang der mindestens einen Feststoffmaterialoberfläche zumindest abschnittsweise mit mindestens einem Bereich ihrer Teilchen-Oberfläche mit der Feststoffmaterialoberfläche (11, 12) in Kontakt sind;
b) einem sich an den ersten Einwirkungsbereich anschliessenden zweiten Einwirkungsbereich (31, 32, 35) mit einem ersten Elektrodenbereich (31) und einem zweiten Elektrodenbereich (32), zwischen denen eine elektrische Spannung anlegbar ist; und mit einem ersten Sammelbereich (33) für die Teilchen der ersten Sorte (2) und einem von dem ersten Sammelbereich getrennten (36) zweiten Sammelbereich (34) für die Teilchen der zweiten Sorte (3), **dadurch gekennzeichnet, dass** die mindestens eine Oberfläche (11) des mindestens einen Feststoffmaterials in dem ersten Einwirkungsbereich (13, 14; 27, 28) konkav gekrümmt ist, so dass die entlang der konkaven Oberfläche (11) bewegbaren Teilchen der ersten Sorte (2) und der zweiten Sorte (3) aufgrund ihrer Zentrifugalkraft während ihrer Bewegung innerhalb des ersten Einwirkungsbereichs an die konkave Oberfläche des Feststoffmaterials gedrückt werden.

31. Vorrichtung nach Anspruch 30, **dadurch gekennzeichnet, dass** der erste Einwirkungsbereich nach der Art eines Zyklonabscheiders mit einem Fluideinlass, einem Fluidauslass, einem Produkteinlass und einem Produktauslass ausgebildet ist.

32. Vorrichtung nach einem der Ansprüche 30 oder 31, **dadurch gekennzeichnet, dass** sie einen Zufuhrbereich aufweist, durch den das Teilchen der ersten Sorte und Teilchen der zweiten Sorte aufweisende Gemisch mittels einer Fördereinrichtung (18, 19) im Zufuhrbereich über den Produkteinlass dem ersten Einwirkungsbereich (13, 14; 27, 28) zuführbar ist.

33. Vorrichtung nach einem der Ansprüche 30 bis 32, **dadurch gekennzeichnet, dass** der erste Einwirkungsbereich (13, 14) ein in einem Gehäuse (14) drehbar gelagertes Rotorelement (13) aufweist, das derart geformt ist, dass bei seiner Drehung die im ersten Einwirkungsbereich (13, 14) enthaltenen Teilchen (2, 3) des Gemisches (1) durch die Oberfläche (12) des sich drehenden Rotorelements (13) mit einer Radial- und Tangentialkomponente beschleunigbar und mit einer Geschwindigkeit mit einer Radial- und einer Tangentialkomponente an die konkav gekrümmte innere Oberfläche (11) des Gehäuses (14) heranführbar sind.

34. Vorrichtung nach Anspruch 33, **dadurch gekennzeichnet, dass** in einen von dem bewegten Teilchenstrom durchwanderbaren Spaltbereich (21) zwischen dem Rotorelement (13) und dem Gehäuse (14) Erhebungen (20) hineinragen, die sich von der Oberfläche (12) des Rotorelements und/oder von der Innenwand des Gehäuses erstrecken, so dass möglicherweise in dem Gemisch enthaltene Agglomerate vor dessen Heranführung an die konkav gekrümmte innere Oberfläche dispergiert werden.

35. Vorrichtung nach einem der Ansprüche 30 bis 34, **dadurch gekennzeichnet, dass** der erste Einwirkungsbereich (13, 14) nach der Art einer Zentrifugaleinrichtung ausgebildet ist und das Rotorelement eine Prallscheibe (13) mit einer Vielzahl von Erhebungen (20) ist.

36. Vorrichtung nach Anspruch 35, **dadurch gekennzeichnet, dass** ein Produkteinlass (15) an einem bezüglich der Prallscheibe (13) exzentrischen Ort des Gehäuses (14) angeordnet ist, so dass die Beschickung exzentrisch auf die Prallscheibe in den Gehäuse erfolgt.

37. Vorrichtung nach Anspruch 33 bis 36, **dadurch gekennzeichnet, dass** an den ersten Einwirkungsbereich (13, 14) eine Luftpumpe oder ein Kompressor angeschlossen ist, um ein Fluid in dem ersten Einwirkungsbereich (13, 14) im Gegenstrom zu dem zentrifugal beschleunigten Teilchenstrom zu pumpen.

38. Vorrichtung nach Anspruch 33 bis 36, **dadurch gekennzeichnet, dass** an den ersten Einwirkungsbereich (13, 14) eine Luftpumpe oder ein Kompressor angeschlossen ist, um ein Fluid in dem ersten Einwirkungsbereich (13, 14) im Gleichstrom zu dem zentrifugal beschleunigten Teilchenstrom zu pumpen.

39. Vorrichtung nach einem der Ansprüche 34 bis 38, **dadurch gekennzeichnet, dass** die Erhebungen (20) kantige Erhebungen im radial äusseren Randbereich der Prallscheibe (13) sind.

40. Vorrichtung nach einem der Ansprüche 34 bis 38, **dadurch gekennzeichnet, dass** die Erhebungen (20) stegartige Erhebungen sind, die sich vom Zentrum zum Randbereich der Prallscheibe (13) erstrecken.

41. Vorrichtung nach einem der Ansprüche 34 bis 40, **dadurch gekennzeichnet, dass** sämtliche Erhebungen (20) an der mindestens einen Prallscheibe (13) ausgebildet sind.

42. Vorrichtung nach einem der Ansprüche 34 bis 38, **dadurch gekennzeichnet, dass** die an der mindestens einen Prallscheibe ausgebildeten Erhebungen nach der Art von Turbinenblättem ausgebildet sind.

43. Vorrichtung nach Anspruch 30, **dadurch gekennzeichnet, dass** der erste Einwirkungsbereich (27, 28) einen gekrümmten Kanal (27) mit einem ersten Ende (27a) und einem zweiten Ende (27b) aufweist, dessen erstes Ende mit einem Produkteinlass (15) und einem Fluideinlass (29) verbunden ist und an dessen zweitem Ende ein Produktabscheider (28) mit einem Produktauslass (16) und einem Fluidauslass (30) zur Trennung von Produkt und Fluid angebracht ist, wobei das Teilchen der ersten Sorte und Teilchen der zweiten Sorte aufweisende Gemisch durch den Produkteinlass (15) zuführbar und mittels eines durch den Fluideinlass (29) zuführbaren und durch den Fluidauslass (30) abführbaren Fluidstroms durch den ersten Einwirkungsbereich mit dem gekrümmten Kanal (27) und an dessen konkav gekrümmter Oberfläche entlang bewegbar und schliesslich durch den Produktabscheider (28) hindurch und durch dessen Produktauslass (16) mit den Teilchen in ihrem jeweiligen elektrisch geladenen Zustand in den zweiten Einwirkungsbereich (31, 32, 35) abführbar ist.

44. Vorrichtung nach Anspruch 43, **dadurch gekennzeichnet, dass** stromauf von dem gekrümmten Bereich des gekrümmten Kanals (27) ein Dispergierwinkel (26) angeordnet ist, auf den die Teilchen des durch die Vorrichtung transportieren Gemisches bei ihrer Richtungsumlenkung aufprallen, so dass möglicherweise in dem Gemisch enthaltene Agglomerate vor dessen Weitertransport zu dem gekrümmten Kanal dispergiert werden.

45. Vorrichtung nach einem der Ansprüche 32 bis 44, **dadurch gekennzeichnet, dass** die Fördereinrichtung (18, 19) in dem Zufuhrbereich eine Förderschnecke (18) aufweist, mittels der die Teilchen der ersten Sorte und die Teilchen der zweiten Sorte dem ersten Einwirkungsbereich (13, 14; 27, 28) zuführbar sind, wobei die Teilchen durch Reibung an der Oberfläche der Förderschnecke während des Zuführens die erste Teilladung ihrer endgültigen elektrischen Ladung erhalten.

46. Vorrichtung nach Anspruch 30, **dadurch gekennzeichnet, dass** der erste Einwirkungsbereich eine Hammermühle oder eine Prallmühle aufweist.

47. Vorrichtung nach Anspruch 30, **dadurch gekennzeichnet, dass** der erste Einwirkungsbereich einen Kanalradwindsichter oder eine Turbomühle aufweist.

48. Vorrichtung nach einem der Ansprüche 30 bis 47, **dadurch gekennzeichnet, dass** im zweiten Einwirkungsbereich (31, 32, 35) der erste Elektrodenbereich aus einer ersten Elektrode (31) und der zweite Elektrodenbereich aus einer zweiten Elektrode (32) besteht.

49. Vorrichtung nach einem der Ansprüche 30 bis 47, **dadurch gekennzeichnet, dass** die erste Elektrode und die zweite Elektrode im zweiten Einwirkungsbereich (31, 32, 35) nach der Art eines Plattenkondensators angeordnet sind.

50. Vorrichtung nach einem der Ansprüche 30 bis 47, **dadurch gekennzeichnet, dass** die erste Elektrode und die zweite Elektrode im zweiten Einwirkungsbereich (31, 32, 35) nach der Art eines Zylinderkondensators angeordnet sind.

## Claims

1. A method for separating the various particle types of a mixture of particles that were obtained by comminuting the bran of cereal grains, in particular wheat, and are present as a mixture (1) of at least one first and one second particle type, wherein:
a) The first (2) and second (3) type of particles of the mixture are moved along at least one surface (11, 12) of at least one solid material in a first exposure area (13, 14; 27, 28) in such a way as to come into contact with the solid material surface (11, 12) as they move along the at least one solid material surface, at least sectionally with at least one area of their particle surface, which electrically charges the particles of the first type (2) and particles of the second type (3) in such a way that the electrical charge of the first type of particles differs from the electrical charge of the second type of particles enough to enable an electrostatic separation of particles of the first type from particles of the second type;
b) The particles of the first type (2) and second type (3) with sufficiently different electrical charges are subsequently moved into a second exposure area (31, 32, 35) in an electrical field between a first electrode area (31) and a second electrode area (32), between which there is an electrical potential difference, at essentially the same speed, as a result of which the particles of the first type (2) and second type (3) with sufficiently different charges move through the electrical field along sufficiently different paths; and
c) The first type of particles (2) and second type of particles (3) are trapped at a first location (33) or second location (34) after they have passed through the electrical field, **characterized in that** the at least one surface (11) of the at least one solid material is concave in a first exposure area (13, 14), and the first type of particles (2) and second type of particles (3) in the mixture moved along the concave surface (11) are pressed by their centrifugal force against the concave surface of the solid material as they move inside the first exposure area.

2. The method according to claim 1, **characterized in that** the particles of the first type (2) are aleuron particles, and the particles of the second type (3) are residual aleuron-free particles, in particular shell particles, of the comminuted bran (1).

3. The method according to one of the preceding claims, **characterized in that** the solid material is electrically conductive.

4. The method according to one of the preceding claims, **characterized in that** the solid material is electrically nonconductive.

5. The method according to one of the preceding claims, **characterized in that** the surface of the solid material is sectionally electrically conductive and electrically nonconductive.

6. The method according to claim 3 or 5, **characterized in that** the conductive solid material is grounded.

7. The method according to one of the preceding claims, **characterized in that** one of the electrode areas (31, 32) is grounded.

8. The method according to claim 6 and/or 7, **characterized in that** the conductive solid material and one of the electrode areas (31, 32) are additionally interconnected in an electrically conductive manner.

9. The method according to one of the preceding claims, **characterized in that** the solid material is a metal or metal alloy, in particular stainless high-grade steel.

10. The method according to one of the preceding claims, **characterized in that** the particles of the first type (2) and particles of the second type (3) of the mixture (1) are moved within the first exposure area (13, 14) in the presence of a nonconductive fluid.

11. The method according to one of the preceding claims, **characterized in that** the particles of the first type (2) and particles of the second type (3) of the mixture (1) are moved within the first exposure area (13, 14) by means of a fluid stream.

12. The method according to one of the preceding claims, **characterized in that** the particles of the first type (2) and particles of the second type (3) of the mixture (1) are moved within the first exposure area (13, 14) against a fluid stream.

13. The method according to one of the preceding claims, **characterized in that** the fluid has nitrogen and/or carbon dioxide.

14. The method according to claim 13, **characterized in that** the fluid is air.

15. The method according to one of the preceding claims, **characterized in that** the relative velocity between the at least one surface (11, 12) and the particles (2, 3) moved along it measures about 5 m/s to 25 m/s.

16. The method according to claim 14 or 15, **characterized in that** the relative atmospheric humidity of the used air lies under 25%.

17. The method according to one of the preceding claims, **characterized in that** the mixture (1) of particles (2, 3) has a moisture content of less than 10%.

18. The method according to one of the preceding claims, **characterized in that** the particles of the mixture (1) are predominately smaller than 500 µm, and preferably larger than 100 µm.

19. The method according to one of the claims 10 to 18, **characterized in that** the first exposure area is designed like a cyclone separator with a fluid inlet, an fluid outlet, a product inlet and a product outlet, wherein the mixture having particles of the first type and particles of the second type is passed through the product inlet essentially electrically uncharged, moved through the first exposure area and along its concave surface in turbulent motions by the fluid stream supplied through the fluid inlet and the fluid stream discharged through the fluid outlet, and finally relayed to the second exposure area through the product outlet with the particles in their respective electrically charged state.

20. The method according to one of the claims 10 to 18, **characterized in that** the first exposure area has a cyclone area resembling a cyclone separator with a fluid inlet, an fluid outlet, a product inlet and a product outlet as well as a supply area, wherein the mixture having particles of the first type and particles of the second type is supplied to the first exposure area by means of a conveying device in the supply area via the product inlet in such a way that the particles of the first type and particles of the second type each acquire a first partial charge of their respective final electrical charge in the supply area, and wherein the mixture of partially charged particles is moved through the cyclone area and along its concave surface in turbulent motions by a fluid stream supplied through the fluid inlet and discharged through the fluid outlet, so that the particles of the first type and particles of the second type each acquire a second partial charge of their final electrical charge, and are finally relayed to the second exposure area through the product outlet.

21. The method according to one of the claims 10 to 18, **characterized in that** the first exposure area (13, 14) has a rotor element (13) that is rotatably mounted in a casing (14), and shaped in such a way that, when rotated, the particles (2, 3) of the mixture (1) contained in the first exposure area (13, 14) are accelerated through the surface (12) of the rotating rotor element (13) with a radial and tangential component, and advanced to the concave inner surface (11) of the casing (14) at a velocity having a radial and tangential component.

22. The method according to claim 21, **characterized in that** elevations (20) project into a gap area (21) traversed by the moved particle stream between the rotor element (13) and the casing (14), extending from the surface (12) of the rotor element and/or from the inner wall of the casing, so as to disperse potentially formed agglomerates between the mixture particles.

23. The method according to one of the claims 10 to 18, **characterized in that** the first exposure area has a bent channel (27) with a first end and a second end, wherein a product inlet and fluid inlet empty into the first end, and a product separator (28) with a product outlet and fluid inlet for separating the product and fluid is secured to the second end, in which the mixture with particles of the first type and particles of the second type is supplied through the product inlet, moved through the first exposure area with the bent channel and along its concave surface by a fluid stream supplied through the fluid inlet and discharged through the fluid outlet, and finally relayed to the second exposure area through the product separator and its product outlet with the particles in their respectively electrically charged state.

24. The method according to claim 23, **characterized in that** the bent channel (27) is a bent hose or bent tube.

25. The method according to claim 23 or 24, **characterized in that** the bent channel (27) is spiral or helical.

26. The method according to one of the claims 10 to 25, **characterized in that** the mixture with the electrically charged particles is discharged from the first exposure area (13, 14; 27, 28) into the second exposure area (31, 32, 35) via gravitational or centrifugal force and/or a fluid stream.

27. The method according to one of the preceding claims, **characterized in that** agglomerates potentially formed by particles of the first type and particles of the second type are dispersed before the first exposure area or within the first exposure area.

28. The method according to claim 27, **characterized in that** potential agglomerates are dispersed before or within the first exposure area via impact.

29. The method according to claim 27 or 28, **characterized in that** the first exposure area is formed via the serial connection of an impact reducer and a cyclone separator.

30. A device for separating the various particle types of a mixture of particles that were obtained by comminuting the bran of cereal grains, in particular wheat, and are present as a mixture (1) of at least one first and one second particle type, using the method according to one of claims 1 to 29, with:
a) A first exposure area (13, 14; 27, 28) with at least one surface (11) of at least one solid material, along which the first type of particles (2) and second type of particles (3) in the mixture can be moved in such a way as to come into contact with the solid material surface (11, 12) while moving along the at least one solid material surface, at least sectionally with at least one area of their particle surface;
b) A second exposure area (31, 32, 35) following the first exposure area, with a first electrode area (31) and a second electrode area (32), between which an electrical voltage can be applied; and with a first collection area (33) for the first type of particles (2) and a second collection area (34) separate from the first collection area (36) for the second type of particles (3),
**characterized in that** at least the one surface (11) of the at least one solid material is concave in the first exposure area (13, 14; 27, 28), so that the particles of the first type (2) and second type (3) that can move along the concave surface are pressed by their centrifugal force against the concave surface of the solid material as they move inside the first exposure area.

31. The device according to claim 30, **characterized in that** the first exposure area is designed like a cyclone separator with a fluid inlet, a fluid outlet, a product inlet and a product outlet.

32. The device according to one of claims 30 or 31, **characterized in that** it has a supply area through which the mixture with particles of the first type and particles of the second type can be passed to the first exposure area (13, 14; 27, 28) through the product inlet by means of a conveying device (18, 19) in the supply area.

33. The device according to one of claims 30 to 32, **characterized in that** the first exposure area (13, 14) has a rotor element (13) that is rotatably mounted in a casing (14) and shaped in such a way that, when rotated, the particles (2, 3) of the mixture (1) contained in the first exposure area (13, 14) can be accelerated through the surface (12) of the rotating rotor element (13) with a radial and tangential component, and advanced to the concave inner surface (11) of the casing (14) at a velocity having a radial and tangential component.

34. The device according to claim 33, **characterized in that** elevations (20) project into a gap area (21) traversed by the moved particle stream between the rotor element (13) and the casing (14), extending from the surface (12) of the rotor element and/or from the inner wall of the casing, so as to disperse agglomerates potentially contained in the mixture before advancing them to the concave inner surface.

35. The device according to one of claims 30 to 34, **characterized in that** the first exposure area (13, 14) is designed like a centrifugal device, and that the rotor element is a baffle plate (13) with a plurality of elevations (20).

36. The device according to claim 35, **characterized in that** a product inlet (15) is situated in an eccentric location of the casing (14) relative to the baffle plate (13), so that loading takes place eccentrically on the baffle plate in the casing.

37. The device according to claims 33 to 36, **characterized in that** an air pump or compressor is hooked up to the first exposure area (13, 14) to pump fluid into the first exposure area (13, 14) in a countercurrent to the centrifugally accelerated particle stream.

38. The device according to claims 33 to 36, **characterized in that** an air pump or compressor is hooked up to the first exposure area (13, 14) to pump fluid into the first exposure area (13, 14) in a co-current to the centrifugally accelerated particle stream.

39. The device according to one of claims 34 to 38, **characterized in that** the elevations (20) are angular elevations in the radially outer edge area of the baffle plate (13).

40. The device according to one of claims 34 to 38, **characterized in that** the elevations (20) are web-like elevations that extend from the center to the edge area of the baffle plate (13).

41. The device according to one of claims 34 to 40, **characterized in that** all elevations (20) are situated at the at least one baffle plate (13).

42. The device according to one of claims 34 to 38, **characterized in that** the elevations formed at the at least one baffle plate are designed as turbine blades.

43. The device according to claim 30, **characterized in that** the first exposure area (27, 28) has a bent channel (27) with a first end (27a) and a second end (27b), the first end of which is connected with a product inlet (15) and a fluid inlet (29), and the second end of which is provided with a product separator (28) with a product outlet (16) and a fluid outlet (30) for separating the product and fluid, wherein the mixture with particles of the first type and particles of the second type can be supplied through the product inlet (15), moved through the first exposure area with the bent channel (27) and along its concave surface by means of a fluid stream that can be discharged through the fluid outlet (30), and finally passed through the product separator (28) and its product outlet with the particles in their respectively electrically charged state into the second exposure area (31, 32, 35).

44. The device according to claim 43, **characterized in that** a dispersing angle (26) is situated upstream from the bent area of the bent channel (27), against which the particles of the mixture transported through the device collide when changing direction, so that any agglomerates potentially contained in the mixture are dispersed before transported further to the bent channel.

45. The device according to one of claims 32 to 44, **characterized in that** the conveying device (18, 19) in the supply area has a conveying screw (18), with which the particles of the first type and particles of the second type can be relayed to the first exposure area (13, 14; 27, 28), wherein the particles receive their final electrical charge via friction on the surface of the conveying screw while imparting the first partial charge.

46. The device according to claim 30, **characterized in that** the first exposure area has a hammer mill or impact mill.

47. The device according to claim 30, **characterized in that** the first exposure area has a non-clogging sifter or a turbo mill.

48. The device according to one of claims 30 to 47, **characterized in that**, in the second exposure area, the first electrode area consists of a first electrode (31), and the second electrode area consists of a second electrode (32).

49. The device according to one of claims 30 to 47, **characterized in that** the first electrode and the second electrode are arranged in the second exposure area (31, 32, 35) like a plate capacitor.

50. The device according to one of claims 30 to 47, **characterized in that** the first electrode and the second electrode are arranged in the second exposure area (31, 32, 35) like a cylinder capacitor.

## Revendications

1. Procédé de séparation des différentes sortes de particules d'un mélange de particules émanant d'un broyage du son de grains de céréales, notamment de blé et qui se présentent sous la forme d'un mélange (1) d'au moins une premier et une deuxième sorte de particules :
a) les particules de la première sorte de particules (2) et de la deuxième sorte de particules (3) du mélange étant déplacées dans une première zone opérationnelle (13 14 ; 27, 28), le long d'au moins une surface (11, 12) d'au moins une matière solide, de façon à ce qu'au cours de leur déplacement le long d'au moins la surface en matière solide, ils soient en contact au moins par sections avec au moins une zone de leur surface de particules avec la surface en matière solide (11, 12), les particules de la première sorte de particules (2) et les particules de la deuxième sorte de particules (3) étant chargées en électricité, de façon à ce que la charge électrique des particules de la première sorte de particules se distingue suffisamment de la charge électrique des particules de la deuxième sorte de particules pour permettre une séparation électrostatique des particules de la première sorte de particules et des particules de la deuxième sorte de particules ;
b) les particules à charge électrique suffisamment différente de la première sorte de particules (2) et de la deuxième sorte de particules (3) étant déplacées ensuite au sein d'une deuxième zone opérationnelle (31, 32, 35) dans un champ électrique entre une première zone d'électrodes (31) et une deuxième zone d'électrodes (32) entre lesquelles il existe une différence de potentiel électrique, à une vitesse sensiblement identique, les particules à charge électrique suffisamment différente de la première sorte de particules (2) et de la deuxième sorte de particules (3) se déplaçant sur des trajets suffisamment différents, lors de leur déplacement à travers le champ électrique ; et
c) les particules de la première sorte de particules (2) et les particules de la deuxième sorte de particules (3) étant capturées respectivement à la fin de leur trajet à travers le champ électrique en un premier emplacement (33) ou en une deuxième emplacement (34), **caractérisé en ce qu'**au moins la surface (11) d'au moins la matière solide a une courbure concave, dans la première zone opérationnelle (13, 14) et **en ce que** les particules de la première sorte (2) et les particules de la deuxième sorte (3) du mélange déplacées le long de la surface concave (11) sont pressées contre la surface concave de la matière solide, sous l'effet de leur force centrifuge, au cours de leur déplacement au sein de la première zone opérationnelle.

2. Procédé selon la revendication 1, **caractérisé en ce que** les particules de la première sorte de particules (2) sont des particules d'aleurone et les particules de la deuxième sorte de particules (3) sont des particules restantes, débarrassées de l'aleurone, notamment des particules de l'enveloppe du blé concassé (1).

3. Procédé selon l'une quelconque des revendications précédentes, **caractérisé en ce que** la matière solide est conductrice d'électricité.

4. Procédé selon l'une quelconque des revendications précédentes, **caractérisé en ce que** la matière solide n'est pas conductrice d'électricité.

5. Procédé selon l'une quelconque des revendications précédentes, **caractérisé en ce que** sur sa surface, la matière solide est conductrice d'électricité et non conductrice d'électricité par sections.

6. Procédé selon la revendication 3 ou 5, **caractérisé en ce que** la matière solide conductrice est mise à la terre.

7. Procédé selon l'une quelconque des revendications précédentes, **caractérisé en ce que** l'une des zones d'électrodes (31, 32) est mise à la terre.

8. Procédé selon la revendication 6 et/ou 7, **caractérisé en ce que** la matière solide conductrice et l'une des zones à électrodes (31, 32) sont en supplément en liaison mutuelle conductrice d'électricité.

9. Procédé selon l'une quelconque des revendications précédentes, **caractérisé en ce que** la matière solide est un métal ou un alliage métallique, notamment un acier fin inoxydable.

10. Procédé selon l'une quelconque des revendications précédentes, **caractérisé en ce que** les particules de la première sorte (2) et les particules de la deuxième sorte (3) du mélange (1) sont déplacées au sein de la première zone opérationnelle (13, 14), en présence d'un fluide non conducteur.

11. Procédé selon l'une quelconque des revendications précédentes, **caractérisé en ce que** les particules de la première sorte (2) et les particules de la deuxième sorte (3) du mélange (1) sont déplacées au sein de la première zone opérationnelle (13, 14) au moyen d'un courant de fluide.

12. Procédé selon l'une quelconque des revendications précédentes, **caractérisé en ce que** les particules de la première sorte (2) et les particules de la deuxième sorte (3) du mélange (1) sont déplacées au sein de la première zone opérationnelle (13, 14) à l'encontre d'un courant de fluide.

13. Procédé selon l'une quelconque des revendications précédentes, **caractérisé en ce que** le fluide comporte de l'azote et/ou du dioxyde de carbone.

14. Procédé selon la revendication 13, **caractérisé en ce que** le fluide est de l'air.

15. Procédé selon l'une quelconque des revendications précédentes, **caractérisé en ce que** la vitesse relative entre au moins la surface (11, 12) et les particules (2, 3) déplacées sur son long est d'environ 5 m/s à 25 m/s.

16. Procédé selon la revendication 14 ou 15, **caractérisé en ce que** l'humidité relative de l'air utilisé est inférieure à 25 %.

17. Procédé selon l'une quelconque des revendications précédentes, **caractérisé en ce que** le mélange (1) de particules (2, 3) a une teneur en humidité inférieure à 10 %.

18. Procédé selon l'une quelconque des revendications précédentes, **caractérisé en ce que** les particules du mélange (1) sont en majeure partie inférieure à 500 µm et de préférence supérieurs à 100 µm.

19. Procédé selon l'une quelconque des revendications 10 à 18, **caractérisé en ce que** la première zone opérationnelle est conçue à la manière d'un cyclone dépoussiéreur avec une entrée de fluide, une sortie de fluide, une entrée de produit et une sortie de produit, le mélange comportant des particules de la première sorte et des particules de la deuxième sorte étant alimenté à travers l'entrée de produit à l'état sensiblement non chargé et déplacé en tourbillons au moyen d'un courant de fluide alimenté à travers l'entrée de fluide et d'un courant de fluide évacué par la sortie de fluide, à travers la première zone opérationnelle et le long de sa surface concave, pour être évacué finalement par la sortie de produit avec les particules dans leur état respectivement chargé d'électricité dans la seconde zone opérationnelle.

20. Procédé selon l'une quelconque des revendications 10 à 18, **caractérisé en ce que** la première zone opérationnelle comporte une zone de cyclone, du type d'un dépoussiéreur à cyclone avec une entrée de fluide, une sortie de fluide, une entrée de produit et une sortie de produit, ainsi qu'une zone d'alimentation, le mélange comportant des particules de la première sorte et des particules de la deuxième sorte étant alimenté par l'intermédiaire de l'entrée de produit vers la première zone opérationnelle au moyen d'un dispositif de transport dans la zone d'alimentation, de façon à e que les particules de la première sorte et les particules de la deuxième sorte absorbent dans la zone d'alimentation respectivement une première charge définitive et le mélange des particules partiellement chargées étant déplacé en tourbillon à travers la zone de cyclone et le long de la surface concave de ce dernier, au moyen d'un courant de fluide alimenté par l'entrée de fluide et évacué par la sortie de fluide, de façon à ce que les particules de la première sorte et les particules de la deuxième sorte absorbent respectivement une deuxième charge partielle de leur charge électrique respectivement définitive et soient finalement évacuées dans la deuxième zone opérationnelle, à travers la sortie de produit.

21. Procédé selon l'une quelconque des revendications 10 à 18, **caractérisé en ce que** la première zone opérationnelle (13, 14) comporte un élément de rotor (13) logé en rotation dans un boîtier (14) qui est formé de façon à ce que lors de sa rotation, les particules (2, 3) du mélange (1) qui sont contenues dans la première zone opérationnelle (13, 14) soient accélérées par la surface (12) de l'élément de rotor (13) en rotation avec une composante radiale et tangentielle et soient amenées à une vitesse avec une composante radiale et tangentielle vers la surface intérieure concave (11) du boîtier (14).

22. Procédé selon la revendication 21, **caractérisé en ce que** des élévations (20) qui s'étendent à partir de la surface (12) de l'éléments de rotor et/ou à partir de la paroi intérieure du boîtier saillissent dans une zone à interstices (21) traversée par le courant de particules en déplacement, entre les éléments de rotor (13) et le boîtier (14), pour disperser des conglomérats qui se sont probablement formés entre les particules du mélange.

23. Procédé selon l'une quelconque des revendications 10 à 18, **caractérisé en ce que** la première zone opérationnelle comporte une canalisation courbée (27) avec une première extrémité et une deuxième extrémité, dans la première extrémité de laquelle débouchent une entrée de produit et une entrée de fluide et dans la deuxième extrémité de laquelle est monté un séparateur de produit (28) avec une sortie de produit et une sortie de fluide, pour la séparation du produit et du fluide, le produit comportant des particules de la première sorte et des particules de la deuxième sorte alimenté à travers l'entrée de produit étant déplacé au moyen d'un courant de fluide alimenté à travers l'entrée de fluide et évacué à travers la sortie de fluide à travers la première zone opérationnelle avec la canalisation courbée et le long de sa surface concave et étant évacué finalement dans la deuxième zone opérationnelle par le séparateur de produit et à travers sa sortie de produit avec les particules dans leur état respectivement chargé en électricité.

24. Procédé selon la revendication 23, **caractérisé en ce que** la canalisation courbée (27) est un flexible courbe ou un tube recourbé.

25. Procédé selon la revendication 23 ou 24, **caractérisé en ce que** la canalisation courbée (27) a un trajet en spirale ou un trajet hélicoïdal.

26. Procédé selon l'une quelconque des revendications 10 à 25, **caractérisé en ce que** l'évacuation du mélange comportant les particules chargées en électricité de la première zone opérationnelle (13, 14 ; 27, 28) vers la deuxième zone opérationnelle (31, 32, 35) est assurée par gravité et/ou par force centrifuge et/ou par un courant de fluide.

27. Procédé selon l'une quelconque des revendications précédentes, **caractérisé en ce qu'**en amont de la première zone opérationnelle ou à l'intérieur de la première zone opérationnelle, des conglomérats qui se sont formés probablement à partir de particules de la première sorte et de particules de la deuxième sorte sont dispersés.

28. Procédé selon la revendication 27, **caractérisée en ce que** la dispersion de conglomérats éventuels en amont ou à l'intérieur de la première zone opérationnelle est assurée par percussion.

29. Procédé selon la revendication 27 aux 28, **caractérisée en ce que** la première zone opérationnelle est formée par un montage en série d'un dispositif de désagrégation par percussion et d'un dépoussiéreur à cyclone.

30. Dispositif de séparation des différentes sortes de particules d'un mélange de particules émanant d'un broyage du son de grains de céréales, notamment de blé et qui se présentent sous la forme d'un mélange (1) d'au moins une premier et une deuxième sorte de particules, par utilisation du procédé selon l'une quelconque des revendications 1 à 29, avec :
a) une première zone opérationnelle (13, 14 ; 27, 28) avec au moins une surface (11, 12) d'au moins une matière solide, le long de laquelle les particules de la première sorte de particules (2) et de la deuxième sorte de particules (3) du mélange peuvent être déplacées de façon à ce qu'au cours de leur déplacement le long d'au moins la surface de matière solide, elles soient en contact par au moins une section de leur surface de particule avec la surface en matière solide (11, 12).
b) une deuxième zone opérationnelle (31, 32, 35) qui se raccorde sur la première zone opérationnelle, avec une première zone d'électrodes (31) et une deuxième zone d'électrodes (32) entre lesquelles une tension électrique peut être appliquée ; et avec une première zone collectrice (33) pour les particules de la première sorte (2) et une deuxième zone collectrice (34) séparée de la première zone collectrice pour les particules de la deuxième sorte (3), **caractérisé en ce qu'**au moins la surface (11) d'au moins une matière solide est concave dans la première zone opérationnelle (13, 14 ; 27, 28), pour que les particules de la première sorte (2) et de la deuxième sorte (3) qui sont déplaçables le long de la surface concave (11) soient pressées contre la surface concave de la matière solide, au cours de leur déplacement au sein de la première zone opérationnelle, sous l'effet de leur force centrifuge.

31. Dispositif selon la revendication 30, **caractérisé en ce que** la première zone opérationnelle est conçue à la manière d'un dépoussiéreur à cyclone avec une entrée de fluide, une sortie de fluide, une entrée de produit et une sortie de produit.

32. Dispositif selon l'une quelconque des revendications 30 ou 31, **caractérisé en ce qu'**il comporte une zone d'alimentation, à travers laquelle le mélange comportant des particules de la première sorte et des particules de la deuxième sorte peut être alimenté au moyen d'un dispositif de transport (18, 19) dans la zone d'alimentation, par l'intermédiaire de l'entrée de produit de la première zone opérationnelle (13, 14 ; 27, 28).

33. Dispositif selon l'une quelconque des revendications 30 à 32, **caractérisé en ce que** la première zone opérationnelle .(13, 14) comporte un élément de rotor (13) logé rotation dans un boîtier (14) qui est formé de façon à ce que lors de sa rotation, les particules (2, 3) du mélange (1) qui sont contenues dans la première zone opérationnelle (13, 14) puissent être accélérées par la surface (12) de l'élément de rotor (13) en rotation avec une composante radiale et tangentielle et puissent être amenées à une vitesse avec une composante radiale et tangentielle vers la surface intérieure concave (11) du boîtier (14).

34. Dispositif selon la revendication 33, **caractérisé en ce que** des élévations (20) qui s'étendent à partir de la surface (12) de l'élément de rotor et/ou à partir de la paroi intérieure du boîtier saillissent dans une zone à interstices (21) pouvant être traversée par le courant de particules en déplacement, entre les éléments de rotor (13) et le boîtier (14), pour disperser des conglomérats qui se sont probablement formés entre les particules du mélange, avant de les ramener vers la surface concave.

35. Dispositif selon l'une quelconque des revendications 30 à 34, **caractérisé en ce que** la première zone opérationnelle (13, 14) est conçue à la manière d'un système centrifuge et **en ce que** l'élément de rotor est une plaque à percussion (13) avec un pluralité d'élévations (20).

36. Dispositif selon la revendication 35, **caractérisé en ce qu'**une entrée de produit (15) est disposée en un emplacement du boîtier (14) qui est excentré par rapport à la plaque à percussions (13), pour que le chargement soit assuré de façon excentrique sur la plaque à percussions dans le boîtier.

37. Dispositif selon l'une quelconque des revendications 33 à 36, **caractérisé en ce qu'**une pompe à air ou un compresseur est raccordé sur la première zone opérationnelle (13, 14), pour pomper un fluide dans la première zone opérationnelle (13, 14), à contre-courant du courant de particules accéléré par une force centrifuge.

38. Dispositif selon la revendication 33 à 36, **caractérisé en ce qu'**une pompe à air ou un compresseur est raccordé sur la première zone opérationnelle (13, 14), pour pomper un fluide dans la première zone opérationnelle (13, 14), à courant identique à celui du courant de particules accéléré par force centrifuge.

39. Dispositif selon l'une quelconque des revendications 34 à 38, **caractérisé en ce que** les élévations (20) sont des élévations à arêtes vives dans la zone de bordure extérieure de la plaque à percussion (13).

40. Dispositif selon l'une quelconque des revendications 34 à 38, **caractérisé en ce que** les élévations (20) sont des élévations du type de nervures, qui s'étendent du centre vers la zone de bordure de la plaque à percussion (13).

41. Dispositif selon l'une quelconque des revendications 34 à 40, **caractérisé en ce que** toutes les élévations (20) sont conçues sur au moins la plaque à percussion (13).

42. Dispositif selon la revendication 34 à 38, **caractérisé en ce que** les élévations conçues sur au moins la plaque à percussion est conçue à la façon de pales de turbine.

43. Dispositif selon la revendication 30, **caractérisé en ce que** la première zone opérationnelle (27, 28) comporte une canalisation courbée (27) avec une première extrémité (27a) et une deuxième extrémité (27b), dont la première extrémité est reliée à une entrée de produit (15) et à une entrée de fluide (29) et sur la deuxième extrémité de laquelle est monté un séparateur de produit (28) avec une sortie de produit (16) et une sortie de fluide (30), pour la séparation du produit et du fluide, le produit comportant des particules de la première sorte et des particules de la deuxième sorte pouvant être alimenté à travers l'entrée de produit (15) et pouvant être déplacé au moyen d'un courant de fluide pouvant être alimenté à travers l'entrée de fluide (29) et pouvant être évacué à travers la sortie de fluide (30), à travers la première zone opérationnelle avec la canalisation courbée (27) et le long de sa surface concave et pouvant être évacué finalement par le séparateur de produit (28) et à travers sa sortie de produit (16) avec les particules dans leur état respectivement chargé en électricité dans la deuxième zone opérationnelle (31, 32, 35).

44. Dispositif selon la revendication 43, **caractérisé en ce qu'**en amont de la zone courbée de la canalisation courbée (27) est disposé un angle de dispersion (26) sur lequel les particules du mélange transporté par le dispositif ricochent lors de leur changement de direction, pour que des conglomérats probablement contenus dans le mélange soit dispersés avant leur transport ultérieur vers la canalisation courbée.

45. Dispositif selon l'une quelconque des revendications 32 à 44, **caractérisé en ce que** le dispositif de transport (18, 19) comporte dans la zone d'alimentation une hélice transporteuse (18), au moyen de laquelle les particules de la premières sorte et les particules de la deuxième sorte peuvent être alimentés vers la première zone opérationnelle (13, 14 ; 27, 28), par frottement sur la surface de l'hélice transporteuse pendant l'alimentation, les particules obtenant la première charge partielle de leur charge électrique définitive.

46. Dispositif selon la revendication 30, **caractérisé en ce que** la première zone opérationnelle comporte un concasseur à marteaux articulés ou un broyeur à percussion.

47. Dispositif selon la revendication 30, **caractérisé en ce que** la première zone opérationnelle comporte un aéro-séparateur à roue ou un broyeur à turbine.

48. Dispositif selon l'une quelconque des revendications 30 à 47, **caractérisé en ce que** dans la deuxième zone opérationnelle (31, 32, 35), la première zone d'électrodes est composée d'une électrode (31) et la deuxième zone d'électrodes est composée d'une deuxième électrode (32).

49. Dispositif selon l'une quelconque des revendications 30 à 47, **caractérisé en ce que** la première électrode et la deuxième électrode dans la deuxième zone opérationnelle (31, 32, 35) sont disposées à la manière d'un condensateur à lames.

50. Dispositif selon l'une quelconque des revendications 30 à 47, **caractérisé en ce que** la première électrode et la deuxième électrode dans la deuxième zone opérationnelle (31, 32, 35) sont disposées à la manière d'un condensateur cylindrique.
